# EUROPEAN PATENT APPLICATION

(11) **EP 1 568 281 A1**
(43) Date of publication of application: **31.08.2005**
(21) Application number: 03733458.8
(22) Date of filing: 17.06.2003
(51) Int. Cl.: A23G 3/00

(54) **RICE FLOUR CAKES AND PROCESS FOR PRODUCING THE SAME**

(30) Priority: 03.07.2002 JP 2002194480
(71) Applicant: Shitogi Japan Co., Ltd., Osaka 563-0043 (JP)
(72) Inventor: FUKUMORI, Kouichi Fukomori Pan Kenkyusho Co.,Ltd., Ikeda-shi, Osaka 563-0043 (JP)
(74) Representative: Hart Davis, Jason
(86) International application number: PCT/JP2003/007635
(87) International publication number: WO 2004/004477

(57) **Abstract**

Provided are: a rice flour composition that is free from wheat flour and any wheat-derived ingredient and can be produced by a process similar to a conventional process and can produce a confection excellent in appearance, internal phase, taste, and keeping quality; a dough product and a connection product each produced with the composition; and a method of producing the confection product.

The rice flour composition for use in confectionery comprises rice flour as a main ingredient and is free from wheat flour and any wheat-derived ingredient. The dough product and the confection product are each produced with the rice flour composition. The method of producing the confection mainly made from rice flour includes the steps of: adding a liquid to the rice flour composition and mixing them to make dough; and shaping the dough and cooking the shaped dough by baking, frying, steam-boiling, microwave-heating, or pressurizing and heating it.

## Description

### Technical Field

The present invention relates to a confection product mainly made from rice flour and a method of producing the same. Specifically, this invention relates to a rice flour composition free from both of wheat flour and any wheat flour-derived ingredient, a dough product and a confection product each produced with such a composition, and a method of producing such a confection product.

### Background Art

Recent years have seen an increase in infant food allergies. The five major food allergens are egg, cow's milk, soybean, wheat, and rice. In Japan, the number of allergic patients to three major allergens, egg, cow's milk and soybean, is larger than that of those to wheat and rice. One of the symptomatic therapies for food allergy is a diet using allergen-free foods.

A variety of alternative foods (food products) have been developed for allergic patients, who have a restricted diet. As regards alternative food products to wheat, Japanese style confections or the like can be substituted for western style confections such as cakes. Egg- or cow's milk- free cakes are developed and commercially available. In terms of taste, however, wheat-free cakes developed are not satisfactory yet. Wheat-allergic patients have a desire to eat some alternative confections similar in taste to wheat-flour confections such as the cakes.

In Japan and Southeast Asian nations, rice is traditionally the chief staple of the diet. In Japan, however, the consumption of rice decreases with each passing year. The yield of rice per unit area is generally higher than that of wheat, and rice is a nutritionally well balanced foodstuff. Thus, there has been a demand for expansion of applications of rice or increase in consumption of rice.

A method of using rice flour in place of wheat flour is proposed. For example, Japanese Patent Application Laid-Open (JP-A) Nos. 04-63555 and 2002-153215 disclose that a western style confection can be produced using an improved method of crushing rice grains into flour or using water-soluble protein-removed rice flour.

The main feature of the rice flour disclosed in JP-A No. 04-63555 is a starch damage rate of 5% or less, whereby a high viscosity is maintained, and the compatibility of gluten is improved. The rice flour disclosed in JP-A No. 2002-153215, which is a water-soluble protein-removed material produced through a special treatment, undergoes steam mixing and rolling to form dough, and thus is unsuitable for the production of a light sponge cake or the like.

It is therefore an object of the present invention to provide a rice flour composition that is free from wheat flour and any wheat-derived ingredient and can be produced by a process similar to a conventional process and can produce a confection excellent in appearance, internal phase, taste, and keeping quality, to provide a dough product and a confection product each produced with such a composition, and to provide a method of producing such a confection product.

### Disclosure of the Invention

In order to achieve the above object, the inventor has made active investigations and consequently found that rice flour can be used by itself for producing rice flour confections that compare favorably with wheat flour confections, in completing the present invention.

Thus, this invention is directed to a rice flour composition for use in confectionery, characterized by comprising rice flour as a main ingredient and being free from wheat flour and any wheat-derived ingredient.

The rice flour composition preferably further comprises one or more additives selected from the group consisting of sugars, exclusive of α,α-trehalose, starch, salt, milk components, egg components, fats, oils, inorganic salts, and vitamins.

This invention is also directed to a dough product, characterized by comprising the rice flour composition and a liquid added thereto.

This invention is also directed to a method of producing a confection mainly made from rice flour, characterized by including the steps of: adding a liquid to the rice flour composition and mixing them to make dough; and shaping the dough and cooking the shaped dough by baking, frying, steam-boiling, microwave-heating, or pressurizing and heating it.

This invention is also directed to a confection product mainly made from rice flour, characterized in that it is produced by the above method.

The confection product is preferably a western style confection product, more preferably a cake, a pie, a scone, a muffin, or a cream puff.

The confection product in preferably a Japanese style confection.

The confection product is preferably a snack food, more preferably Okonomiyaki, Japanese style pancakes containing vegetables and various other foodstuff, or Takoyaki, fried octopus balls.

The rice flour composition of this invention can form a raw material that is free from wheat flour and any wheat-derived ingredient and can be produced by a process similar to a conventional process and can produce a confection excellent in appearance, internal phase, taste, and keeping quality. With the rice flour composition, rice flour confections can be produced by the same process as conducted on the production lines for wheat flour confections. Any of a variety of auxiliary materials may be added to the rice flour composition to form a raw material convenient for the production of any of a variety of confections.

The dough product of this invention can produce savings in time and labor for dough process and can produce confections with less variation in quality within the desired time period, so that fresh confections with a constant quality can be provided for consumers at many places. The dough product of this invention can be resistant to quality degradation in storage at low temperatures or in frozen storage for a long term and can produce connections with a constant quality within a certain time period.

According to the inventive process using the inventive rice flour composition or dough product, rice flour confections with good appearance, good internal phase, good taste, and good keeping quality, equal or superior to those of wheat flour confections, can be produced in existing equipment.

The confection of this invention can have a similar taste to the corresponding wheat-flour confection and can also have a moist or chewy feeling specifically derived from the raw material of rice. Thus, the taste of such a confection can be preferred by not only wheat-allergic patients but also general consumers. In addition, the rice flour confection of this invention has good keeping quality and is resistant to degradation in taste, so that its distribution route can be wider. It can lead to an increase in not only rice consumption but also total consumption of confectionery.

### Beat Mode for Carrying Oat the Invention

According to the present invention, the rice flour composition for use in confectionery comprises rice flour as a main ingredient and is free from wheat flour and any wheat-derived ingredient.

As regards this invention, the wording "free from wheat flour and any wheat-derived ingredient" means that the product is substantially free from not only wheat flour but also any wheat-derived ingredient, specifically wheat proteins and gluten composed of wheat proteins, which are believed to be a main cause of wheat allergy. As regards the inventive product, if any wheat-derived allergic substance is measured by ELISA (Enzyme Linked ImmunoSorbent Assay) and found to be under the detection sensitivity, the product should be determined as being "free from wheat and any wheat-derived ingredient."

The rice flour for use in this invention is a pulverized or powdered product of non-glutinous raw rice. Examples of the species of the non-glutinous rice include, but are not limited to, japonica rice, indica rice and javanica rice. Before pulverization, the raw rice may be, but not limited to, polished rice, brown rice or hulled rice, scrap rice, rice of old crop, or the like.

Examples of the applicable rice flour include non-glutinous rice flour, which is conventionally used as a raw material for Japanese style confectionery, and various types of rice flour. In general, the particle size of the rice flour is preferably, but not limited to, 200 µm or less in terms of average particle diameter, in terms of producing homogeneous dough.

If necessary depending on the type of the confection to be produced, the rice flour composition of this invention may preferably further contain one or more additives selected from the group consisting of sugars, exclusive of α,α-trehalose, starch, salt, milk components, egg components, fats, oils, inorganic salts, and vitamins.

Examples of the sugars, exclusive of α,α-trehalose, include such sugars as glucose, fructose, lactose, sucrose, maltose, and isomaltose, and sugar alcohols such as sorbitol, maltitol, palatinit, and hydrogenated starch syrup.

Refined salt containing 99% or more of sodium chloride or non-refined salt such as solar salt and crude salt may be used without limitation as the salt.

Examples of the starch include cornstarch, dog-tooth violet starch, tapioca starch, sweet potato starch, potato starch, arrowroot starch, and bracken-root starch.

Examples of the milk components include dried milk, non-fat dry milk and dried soybean milk.

Examples of the egg components include an egg yolk, an egg white, a whole egg, and any other egg-derived components.

Examples of the fats and oils include butter, margarine, shortening, lard, and olive oil.

Examples of the inorganic salts include ammonium chloride, magnesium chloride, ammonium carbonate, ammonium hydrogencarbonate, sodium hydrogencarbonate, potassium carbonate, calcium carbonate, ammonium sulfate, calcium sulfate, magnesium sulfate, tricalcium phosphate, diammonium hydrogenphosphate, ammonium dihydrogenphosphate, calcium monohydrogenphosphate, calcium dihydrogenphosphate, calcined calcium, and ammonium alum.

Examples of the vitamins include vitamin C, vitamin B₁, vitamin B₂, vitamin D, vitamin E, and carotene.

Within the limits of the object of this invention, the inventive rice flour composition may contain any other foodstuff or food additive, such as a fruit, seed or branch or leaf of a plant, wheat starch-free baking powder, or an emulsifier.

The content of each material in the rice flour composition may be appropriately set depending on the type of the confection.

The rice flour composition of this invention may be provided as a flour premix for commercial use or home use. Dough for rice flour confections can industrially produced or home-produced with the rice flour composition appropriately. The dough can be cooked to produce the rice flour confections appropriately.

The dough product of this invention may be produced by a process including the steps of adding a liquid to the rice flour composition, optionally adding any other material thereto, and mixing them. The liquid to be added may be, but not limited to, water, cow's milk or the like. Any other material for the rice flour composition (such as egg, fat or oil) may be added immediately before the production of the dough is started, instead of being added to form the composition. Mixing conditions would readily be set by a person skilled in the art, depending on the type of the connection to be prepared. The dough may be aged, as needed depending on the purpose.

If the content of the added egg, fat or oil in the inventive dough prepared for western style confectionery such as cakes, pies, scones, muffins, and cream puffs, is higher than that in the corresponding wheat flour dough, the resulting confection can have a better taste, and such a taste can be lighter than that of the corresponding wheat flour confection.

The resulting dough according to this invention may be shaped and subsequently cooked or may be stored at low temperatures or in a frozen state, heated or thawed and cooked as needed.

The inventive method of producing the rice flour confection includes the steps of shaping the dough and cooking the shaped dough by baking, frying, steam-boiling, microwave-heating, or pressurizing and heating it.

The dough may be cooked by any known method such as baking, frying, steam-boiling, microwave heating, and pressurizing and heating. In the baking process, for example, the dough may be heated from an upper side and/or a lower side in an oven, or may be brought into direct contact with a previously heated furnace face and heated. In the frying process, for example, the dough may be heated by cooking with edible oil, so called frying up or deep-trying. In the steam-boiling process, for example, the dough may be heated in a steamer, which is placed on a flame to produce steam, or may be heated in a vessel with steam, which is previously produced in a boiler and then fed into the vessel. In the microwave heating process, for example, the dough may be heated using a device or an apparatus having the function of generating and applying microwave. In the pressurizing and heating process, for example, the dough may be pressurized and heated in a pressure cooker or an apparatus having the function of heating at a high temperature under a high pressure.

In the step of shaping the dough, any type of sweetened paste or jam of beans or the like (an) or any filling such as a delicatessen may advantageously be wrapped in the dough for a confection or a snack food. On the other hand, after the dough is heated, any type of sweetened paste or jam of beans or the like (an), dairy cream, custard cream, or the like may be added to form Dorayaki (Japanese style bean-jam pancakes), a cake, a cream puff, or the like. It is important that any seasoning or sauce produced with wheat flour or wheat, such as fermented soybean paste (miso) and soy sauce, should not be added to the paste or jam, the delicatessen, or the cream to be added to the dough.

Examples of the rice flour confection produced by the inventive method may include various types of confections that are otherwise produced with wheat flour in a conventional manner, such as western style confectionery such as cakes, pies, scones, muffins, and cream puffs; Japanese style confections such as Dorayaki (Japanese style bean-jam pancakes) and Japanese style steamed beam-jam buns (Manju buns); and snack foods such as a Japanese style pancake containing vegetables and other foodstuff (an Okonomiyaki pancake) and a fried doughy ball filled with octopus or an octopus ball (a Takoyaki food). Examples thereof are not limited to the above and also include any other food products that can be produced with the inventive rice flour composition by the inventive method.

The rice flour confection is preferably a western style confection, more preferably a cake, a pie, a scone, a muffin, or a cream puff, because the taste of such a confection can be superior to the corresponding wheat flour confection.

The rice flour confection produced as shown above can have good keeping quality and can easily be stored at low temperatures or in a frozen state. The stored rice flour confection can advantageously be heated or thawed as needed for enjoyment of its taste.

### Examples

The constitution and the effect of the present invention are more specifically described in the examples below.

### Example 1

### Production of Rice-Flour Sponge Cake

A flour premix was prepared by a process including the steps of: adding 100 g of cornstarch and 3 g of a baking powder (manufactured by Oriental Yeast, Co., Ltd. and containing cornstarch as a dispersing agent free from wheat starch) to 320 g of a gluten-free rice flour (Kome-no-Ko (trade name) manufactured by Saito Selfun Co., Ltd.); and sifting the mixture through a sieve.

To a vessel were added 12 egg yolks, 18 whole egg and 700 g of granulated sugar and mixed using a whisk until fine foams were produced. Thereafter, the flour premix was added through a sieve and lightly mixed. To the resulting mixture was added 200 g of unsalted butter melted in a bowl in simmering water and mixed so that dough was prepared. The resulting dough was poured into a mold and then baked in an oven at 180°C (direct heat) and 170°C (indirect heat) for 15 minutes so that a rice-flour sponge cake was obtained.

### Comparative Example 1

### Production of Wheat-Flour Sponge Cake

A wheat flour premix was prepared by a process including the steps of: adding 100 g of cornstarch and 3 g of a baking powder (manufactured by Oriental Yeast, Co., Ltd. and containing cornstarch as a dispersing agent free from wheat starch) to 320 g of soft wheat flour; and sifting the mixture through a sieve.

To a vessel were added 12 egg yolks, 18 whole eggs and 700 g of granulated sugar and mixed using a whisk until fine foams were produced. Thereafter, the wheat flour premix was added through a sieve and lightly mixed. To the resulting mixture was added 200 g of unsalted butter melted in a bowl in simmering water so that dough was prepared. The resulting dough was poured into a mold and then baked in an oven at 180°C (direct heat) and 170°C (indirect heat) for 16 minutes so that a wheat-flour sponge cake was obtained.

### Evaluation Test 1

Seven tasters each carried out a sensory test on the appearance, internal phase and taste feelings of each resulting sponge cake and made an evaluation with respect to the evaluation items below.
(1) Appearance was evaluated by dent, expansion and color tone.
(2) Internal phase was evaluated by texture, color tone and touch feeling of a cut surface.
(3) Taste feelings were evaluated by flavor including taste and smell as the main part and by chew feeling including texture as the main part.

The expansion and the color tone of the rice-flour sponge cake were as good as those of the wheat-flour sponge cake. In addition, while the wheat-flour sponge cake had a dent after the baking, the rice-flour sponge cake was free from such a dent. Concerning the internal phase, the texture, the color tone and the touch feeling of the rice-flour sponge cake were good and compared favorably with those of the wheat-flour sponge cake. Concerning the taste feelings, the rice-flour sponge cake smoothly melted in the mouth and had a moist taste and a faint aroma of the rice flour. The resulting evaluation of the rice-flour sponge cake was equal to or higher than that of the wheat-flour sponge cake.

### Evaluation Test 2

### Influence of Freezing on Taste Feelings of Sponge Cake

The rice-flour sponge cake of Example 1 and the wheat-flour sponge cake of Comparative Example 1 were each stored at -20°C in a frozen state and after 30 days, thawed at room temperature. Similarly to Evaluation Test 1, seven tasters each carried out a sensory test on the taste feelings of each sponge cake. As a result, the rice-flour sponge cake still had a moist taste and showed almost no change in taste feelings after the freezing and thawing, while the wheat-flour sponge cake had a rough sponge texture, and it was felt that a degradation in taste should be caused by freezing.

### Example 2

### Production of Rice-Flour Choux Pastry

A flour premix for use in choux pastry was prepared by a process including the steps of mixing 600 g of a gluten-free rice flour (Kome-no-Ko (trade name) manufactured by Saito Seifun Co., Ltd.) and 8 g of salt; and sifting the mixture through a sieve.

To a pot were added 500 g of water and 500 g of cow's milk and heated. To the mixture was added 400 g of unsalted butter and heated with stirring until the butter melted. After the heating was stopped, the flour premix was added thereto and mixed, and then 1000 to 1200 g of whole egg was added, while the state of the resulting dough was observed. After mixing, dough was completed.

Half of the resulting dough was frozen at -20°C. Remaining half of the dough was shaped, while squeezed out on a baking sheet from a tipped forcing bag. The shaped dough was then placed in a flat oven. After a little excessive spray, the shaped dough was baked at 220°C (direct heat) and 230 to 240°C (indirect heat) for 10 to 15 minutes and then dried at 200°C (direct heat) and 200°C (indirect heat) for 10 minutes so that a rice-flour choux pastry was prepared.

After 30 days, the frozen dough was thawed at room temperature and shaped while squeezed out on a baking sheet from a tipped forcing bag. The shaped dough was then placed in a convection oven. After a little excessive spray in such a manner that the whole was lightly moistened, the shaped dough was baked at 220°C for 5 minutes. After another spray, the baked dough was dried at 170°C for 5 to 10 minutes so that rice-flour choux pastries were prepared.

The dough prepared in this example was not adhesive and had good handleability and good machinability. The production time for the dough was the same as that for the corresponding wheat-flour dough, and the workability was good. The resulting choux pastry had a significantly increased volume, a puffy state and a good color tone. The texture of the resulting choux pastry was crisper than that of the corresponding wheat-flour choux pastry. The choux pastry made from the dough after the 30-day freezing had the same characteristics. After the choux pastry was allowed to stand for a week in a refrigerator (5°C), its taste feelings almost did not change, and a rough texture by hardening was not observed. Thus, it had a good keeping quality.

### Example 3

### Production of Rice-Flour Muffin

A flour premix for use in muffin was prepared by a process including the steps of mixing 1680 g of a gluten-free rice flour (Kome-no-Ko (trade name) manufactured by Saito Seifun Co., Ltd.), 36 g of a baking powder (manufactured by Oriental Yeast, Co., Ltd. and containing cornstarch an a dispersing agent free from wheat starch) and 18 g of baking soda; and sifting the mixture through a sieve. Thoroughly mixed were 480 g of unsalted butter and 900 g of granulated sugar, and then 12 whole eggs (L,L) was added thereto and mixed. The prepared flour premix was then added through a sieve and lightly mixed. Then 300 g of milk powder and 900 g of water were added thereto, and 1200 g of whole blueberry, 150 g of dried blueberry and half tea-spoonful of orange paste were also added and lightly mixed so that muffin dough was prepared. The muffin dough was poured into a muffin mold and baked in an oven at 180°C (direct heat) and 170°C (indirect heat) for 20 minutes so that a rice-flour blueberry muffin was prepared.

The rice-flour muffin dough as prepared was not adhesive and had good handleability and good machinability. The production time for the dough was the same as that for the corresponding wheat-flour dough, and the workability was good. The resulting rice-flour muffin had a significantly increased volume, a puffy state and a good color tone. The texture of its cut surface was good, and its taste was also good. After the rice-flour muffin was allowed to stand for a week in a refrigerator (5°C), its taste feelings did not change, and a rough texture by hardening was not observed. Thus, it had a good keeping quality.

### Example 4

### Production of Rice-Flour Cupcake

A flour premix for use in cupcake was prepared by a process including the steps of mixing 1200 g of a gluten-free rice flour (Kome-no-Ko (trade name) manufactured by Saito Seifun Co., Ltd.), 6 g of a baking powder (manufactured by Oriental Yeast, Co., Ltd. containing cornstarch as a dispersing agent free from wheat starch) and 6 g of baking soda; and sifting the mixture through a sieve.

Thoroughly mixed were 1200 g of unsalted butter and 1200 g of granulated sugar, and then 1200 g of whole egg was added thereto and mixed. The prepared flour premix was then added through a sieve and lightly mixed. Then 100 g of milk powder and 150 g of water were added thereto, and 120 g of cocoa powder, 6 g of cinnamon powder, 60 g of cappuccino powder, and 6 g of cloves powder were also added and lightly mixed so that cupcake dough was prepared. The dough was poured into a cupcake mold and baked in an oven at 180°C (direct heat) and 170°C (indirect heat) for 15 minutes. Rum syrup was applied to the top of the baked cupcake with a brush so that a cappuccino rice-flour cupcake was prepared.

The rice-flour cupcake dough as prepared was not adhesive and had good handleability and good machinability. The production time for the dough was the same as that for the corresponding wheat-flour dough, and the workability was good. The resulting rice-flour cupcake had a significantly increased volume, a puffy state and a good color tone. The texture of its cut surface was good, and its taste was also good. After the rice-flour cupcake was allowed to stand for a week in a refrigerator (5°C), its taste feelings almost did not change, and a rough texture by hardening was not observed. Thus, it had a good keeping quality.

### Industrial Applicability

The rice flour composition of the present invention can form a raw material that is free from wheat flour and any wheat-derived ingredient and can be produced by a process similar to a conventional process and can produce a confection excellent in appearance, internal phase, taste, and keeping quality. With such a rice flour composition, rice flour connections can be produced by the same process as conducted on the production lines for wheat flour confections. Any of a variety of auxiliary materials may be added to the rice flour composition to form any raw material convenient for the production of any of a variety of confections.

## Claims

1. A rice flour composition for use in confectionery, which comprises rice flour as a main ingredient and is free from wheat flour and any wheat-derived ingredient.

2. The rice flour composition according to Claim 1, further comprising one or more additives selected from the group consisting of sugars, exclusive of α,α-trehalose, starch, salt, milk components, egg components, fats, oils, inorganic salts, and vitamins.

3. A dough product, which comprises the rice flour composition according to Claim 1 or 2 and a liquid added to the composition.

4. A method of producing a confection mainly made from rice flour, comprising the steps of: adding a liquid to the rice flour composition according to Claim 1 or 2 and mixing them to make dough; and shaping the dough and cooking the shaped dough by baking, frying, steam-boiling, microwave-heating, or pressurizing and heating it.

5. A confection product mainly made from rice flour, which is produced by the method according to Claim 4.

6. The confection product according to Claim 5, wherein the product is a western style confection product.

7. The confection product according to Claim 6, wherein the western style confection is a cake, a pie, a scone, a muffin, or a cream puff.

8. The confection product according to Claim 5, wherein the product is a Japanese style confection product.

9. The confection product according to Claim 5, wherein the product is a snack food product.

10. The confection product according to Claim 9, wherein the snack food is Okonomiyaki, Japanese style pancakes containing vegetables and various other foodstuffs, or Takayaki, fried octopus balls.
